# EUROPÄISCHE PATENTSCHRIFT

(11) **EP 1 421 851 B1**
(45) Veröffentlichungstag und Bekanntmachung des Hinweises auf die Patenterteilung: **29.03.2006**
(21) Anmeldenummer: 03025891.7
(22) Anmeldetag: 12.11.2003
(51) Int. Cl.: A01N 43/38, A01N 61/00

(54) **Verfahren und Verwendung von Indol-Derivaten zur Verringerung des Aufplatzens von Obst- oder Gemüsefrüchten**
Method and use of indol derivatives for reducing fruit cracking
Méthode et utilisation de dérivés d'indole pour réduire l'éclatement des fruits

(30) Priorität: 21.11.2002 DE 10254269
(43) Veröffentlichungstag der Anmeldung: 26.05.2004
(73) Patentinhaber: Globachem n.v., 3803 Sint-Truiden (BE)
(72) Erfinder: Quaghebeur, Koen, 3803 Sint-Truiden (BE)
(74) Vertreter: Flaccus, Rolf-Dieter

(56) Entgegenhaltungen:
- WO-A-96/23413
- US-B1- 6 169 057
- DATABASE CA [Online] CHEMICAL ABSTRACTS SERVICE, COLUMBUS, OHIO, US; BATAL, K. M. ET AL: "Exogenous growth-regulator effect on tomato fruit cracking and pericarp morphology" retrieved from STN Database accession no. 77:136179 XP002265224 & JOURNAL OF THE AMERICAN SOCIETY FOR HORTICULTURAL SCIENCE (1972), 97(4), 529-31 ,

## Beschreibung

Die vorliegende Erfindung betrifft ein Verfahren zur Verringerung des Aufplatzens von Obst- und Gemüsefrüchten, bei dem eine Tryptophan enthaltende Formulierung verwendet wird, sowie die Verwendung einer Tryptophan enthaltenden Formulierung zur Verringerung des Aufplatzens von Obst- oder Gemüsefrüchten.

Das Aufplatzen von Früchten verschiedener Obst- und Gemüsesorten, das insbesondere in Folge von Regen vor der Ernte auftritt, ist weltweit ein Problem im Obst- und Gemüseanbau. Das Aufplatzen der Früchte mindert deren Qualität und somit den Ertrag erheblich und kann sogar zu einem Totalverlust der Ernte führen. Insbesondere beim Anbau von Süßkirschen (*Prunus avium* L.) stellt das Aufplatzen der Kirschen ein großes Problem dar. Das Aufplatzen der Früchte ist aber auch ein Problem beim Anbau von Steinobst, Kernobst, Beerenfrüchten, Trauben sowie Tomaten.

Das Phänomen des Aufplatzens von Früchten in Folge von Regen vor der Ernte wird seit vielen Jahrzehnten studiert, jedoch ist der Mechanismus des Aufplatzens der Früchte noch immer Gegenstand wissenschaftlicher Diskussionen. Gegenwärtig wird angenommen, dass der im Fruchtinneren herrschende Turgordruck die treibende Kraft beim Aufplatzen der Früchte ist. Das Wasser, das die Oberfläche der Frucht durchdringt, führt zu einem Aufbrechen der Kutikula und der epidermalen Zellen, also den tragenden Strukturen der Fruchthaut, und initiiert auf diese Weise das Aufplatzen der Frucht.

Für das Aufplatzen der Früchte ist die Niederschlagsmenge an sich nur von sekundärer Bedeutung, da im Prinzip ein einziger Regentropfen ausreicht, um das Aufplatzen einer Frucht zu bewirken.

Auch die Form der Frucht ist für das Phänomen des Aufplatzens von Bedeutung. Lässt die Form der Frucht eine Akkumulation von Wasser an bestimmten Stellen zu, so wird dadurch das Aufplatzen begünstigt. So zeigen Früchte, die eine Spitze haben, die Tendenz, an dieser Stelle schneller aufzuplatzen, weil ein Regentropfen eher an der Spitze als an einer Fläche hängen bleibt. Früchte, bei denen der Fruchtstiel tief eingepflanzt ist, lassen an dieser Stelle eher Tropfen stehen und platzen in der Folge an dieser Stelle eher auf.

Ebenso bestimmt die Festigkeit der Früchte, wie leicht diese aufplatzen. In der Regel platzen weiche Früchte weniger leicht als festere Früchte.

Die durch das Aufplatzen verursachten Risse in den Früchten können tief oder seicht sein. Die Risse können sich dabei über die gesamte Frucht ziehen und/oder charakteristische Muster erzeugen. Jedoch führen alle Risse bis in das Fruchtfleisch und ergeben dadurch eine mindere Qualität der Früchte.
Um dem Problem des Aufplatzens von Früchten zu begegnen, gibt es verschiedene konventionelle Ansätze. Eine Ansatzmöglichkeit ist der Anbau weniger aufplatzempfindlicher Obst- und Gemüsesorten, denn es gibt große Unterschiede in der Aufplatzempfindlichkeit zwischen den unterschiedlichen Sorten. Diese Unterschiede werden meistens mit einer unterschiedlich dicken Fruchthaut und/oder einer unterschiedlichen Anzahl von Stromata pro cm² Fruchthaut erklärt. So weisen weniger aufplatzempfindliche Sorten eine dickere Fruchthaut und weniger Stromata pro cm² Fruchthaut auf als empfindlichere Sorten. Aber auch die Form und Festigkeit der Früchte der unterschiedlichen Sorten beeinflusst deren Aufplatzempfindlichkeit.

Ein anderer konventioneller Ansatz, das Aufplatzen von Früchten zu verhindern, ist das Überdachen der Obst- und Gemüsekulturen. Dadurch ist eine Reduktion des Aufplatzens der Früchte auf ungefähr 10%, bezogen auf die Früchte gleicher Sorten nicht überdachter Kulturen, möglich. Allerdings führt das Überdachen einer Obst- und Gemüsekultur nicht zwingend zu einer Reduktion des Aufplatzens der Früchte. So gibt es Untersuchungen, bei denen mehr der überdachten Früchte aufgeplatzt waren als Früchte bei den nicht überdachten Kulturen.

Durch die mit der Überdachung einhergehende, verminderte Sonneneinstrahlung kommt es jedoch zu einer Qualitätsminderung der Früchte. Ebenso kann es durch eine durch die Überdachung bedingte, verminderte Luftzirkulation zu Staunässe und in der Folge zu Pilzbefall in der Obst- oder Gemüsekultur kommen. Dennoch ist es in vielen Fällen notwendig, einen Windschutz zu installieren, um die Gefahr von windbedingten Schäden zu reduzieren.

Ein weiterer Nachteil von Überdachungen ist, dass diese teuer in der Anschaffung, wartungsbedürftig und dadurch kostenintensiv sind.

Ein weiterer Ansatz, das Aufplatzen von Früchten zu verhindern, bestand in der Anwendung von Blattdüngern, wie zum Beispiel Calciumchlorid, um den osmotischen Druck in Folge einer Erhöhung des Ionengehalts des Regenwassers auf den Früchten zu vermindern, oder verschiedenen Algenextrakten und Chelaten, die die Fruchtoberfläche durch ihre oberflächenaktiven Eigenschaften hydrophober machen sollen. Die unterschiedlichen Produkte führten jedoch alle zu sehr inhomogenen Ergebnissen, so dass mit diesen Mitteln kein für den Obst- oder Gemüseanbau ausreichender Erfolg erzielt werden konnte.

Es besteht somit ein Bedürfnis an kostengünstigen, wirksamen, aber nicht toxischen Zusammensetzungen und Verfahren, mit denen das Aufplatzen von Früchten verringert werden kann.

Überraschenderweise hat sich in zahlreichen Versuchen gezeigt, dass durch die Anwendung von Tryptophan ein Aufplatzen von Früchten in bisher nicht bekanntem Maß und auf noch unbekannte Weise verhindert werden kann. Von besonderem Interesse ist die Anwendung von Tryptophan, da Tryptophan eine essentielle Aminosäure und ökotoxikologisch unbedenklich ist.

Die vorliegende Erfindung betrifft ein Verfahren zur Verhinderung des Aufplatzens von Obst- und Gemüsefrüchten, bei dem eine Formulierung, die Tryptophan enthält, in einer phytoeffektiv wirksamen Menge vorzugsweise auf die oberirdischen Teile der zu behandelnden Pflanzen aufgebracht wird.

Schließlich betrifft die Erfindung die Verwendung von Tryptophan zur Herstellung einer Formulierung, deren Aufbringen auf höhere Pflanzen das Aufplatzen ihrer Früchte verhindert.

Auxine gehören zu den Pflanzenhormonen, die eine wichtige Rolle bei der Wachstums- und Entwicklungskontrolle der Pflanzen spielen. Zu den natürlichen wachstumsregulierenden Substanzen, die von Pflanzen synthetisiert werden, gehören neben den Auxinen unter anderem auch die folgenden Substanzen und Hormonklassen: Gibberelline, Cytokinine, Ethylen, Abscisinsäure und Brassinosteroide. Darüber hinaus ahmen viele synthetische Verbindungen die Aktivitäten nach, die für die natürlichen Wachstumsregulatoren charakteristisch sind.

Zu den bekannten pflanzenphysiologischen Wirkungen, die Auxin und dessen synthetische Derivate haben, zählen u. a.
- die Stimulation des Streckungswachstums bei Koleoptilen,
- die Aufrechterhaltung der Apikaldominanz,
- die Induktion der Zellteilung im Kambium,
- die Förderung von Adventiv- und Seitenwurzeln, und
- die Hemmung des Blattfalls.

Die Raten von Auf- und Abbau sowie die Modifizierbarkeit von Indol-3-Essigsäure bestimmen die Konzentration der physiologisch aktiven Form dieses Phytohormons in der Pflanzenzelle. Eine Substanz, die wie Auxin wirkt, muss drei Strukturmerkmale aufweisen:
1. im Molekül muss ein Ringsystem mit mindestens einer Doppelbindung vorhanden sein,
2. der Doppelbindung benachbart muss eine Seitenkette vorhanden sein, und
3. es muss eine Carboxylgruppe vorhanden sein, die durch ein oder zwei C-Atome vom Ringsystem getrennt ist.

L-Tryptophan ist ein Vorläufer bei der mikrobiellen Synthese von Indol-3-Essigsäure (Arshad und Frankenberger, 1991, Plant Soil 133, Seiten 1-8) und es wurde gezeigt, dass die Anreicherung von Tryptophan im Boden das Pflanzenwachstum fördert. Beispielsweise wurde das Wachstum von Douglas-Fichten durch Anwendung von Tryptophan und einer Inokulation mit Pilzen, die in der Lage sind, Indol-3-Essigsäure aus Tryptophan zu synthetisieren, gesteigert (Frankenberger und Poth, 1987, Environ. Microbiol. 53, Seiten 2908-2913). Die pflanzenphysiologischen Eigenschaften der Aminosäure Tryptophan als Wachstumsregulator wurden beispielsweise in US 6,169,057 beschrieben.

Bei dem erfindungsgemäßen Verfahren werden die Pflanzen mit Tryptophan behandelt. Die Verwendung einer Formulierung, welch Tryptophan als den das Aufplatzen von Früchten verhindernden Wirkstoff enthält, hat vorteil da Tryptophan eine essentielle Aminosäure ist, als natürlich vorkommende Substanz auch im ökologischen Obst- und Gemüseanbau verwendet werden kann und zudem kostengünstiger als synthetische Auxinmimetika ist.

Bei dem erfindungsgemäßen Verfahren wird Tryptophan in einer Menge von 10⁻⁴ bis 10⁶ g/ha, vorzugsweise in einer Menge von 10 bis 1000 g/ha, und besonders bevorzugt in einer Menge von 25 bis 200 g/ha aufgebracht.

Bei einem bevorzugten Verfahren wird eine wirkstoffhaltige Formulierung auf die Pflanzen aufgebracht, bei der es sich um eine saure Lösung handelt, deren pH auf einen annähernd neutralen Wert, vorzugsweise auf pH 7,4 gepuffert wurde.

Bei einer bevorzugten Ausführung des Verfahrens wird das Tryptophan in einer Mischung mit zumindest einem anderen Wachstumsregulator, wie beispielsweise einem Gibberellin, Abscisinsäure oder anderen, und/oder zumindest einem Düngemittel und/oder mindestens einem Tensid aufgebracht. Dabei sind unter dem Begriff "Düngemittel" auch Aminosäuren, Peptide, hydrolysierte Proteine und dergleichen zu verstehen.

Das erfindungsgemäße Verfahren kann besonders gut bei Tomaten, Steinobst, beispielsweise Kirschen oder Pflaumen, Kernobst, beispielsweise Äpfel oder Birnen, Beeren, wie Stachelbeeren oder Erdbeeren, oder Trauben angewendet werden. Besonders bevorzugt wird eine Anwendung des erfindungsgemäßen Verfahrens bei Süßkirschen *(Prunus avium* L.).

Das erfindungsgemäße Verfahren kann während oder nach der Blüte der zu behandelnden Pflanzen angewendet werden. Vorzugsweise erfolgt das Aufbringen der wirkstoffhaltigen Formulierung auf die Pflanzen, nachdem diese Früchte ausgebildet haben. Besonders bevorzugt erfolgt die Anwendung des erfindungsgemäßen Verfahrens in der Periode von 8 Wochen vor der Ernte, ganz besonders bevorzugt etwa 3 Wochen vor der Ernte. Gegebenenfalls kann eine wiederholte Behandlung der Pflanzen stattfinden.

Die vorliegende Erfindung betrifft weiterhin die für das erfindungsgemäße Verfahren zur Verringerung des Aufplatzens von Obst- und Gemüsefrüchten notwendigen Formulierungen. Die erfindungsgemäßen Formulierungen weisen vorzugsweise einen neutralen pH-Wert auf und besonders bevorzugt einen pH-Wert von 7,4. Es handelt sich bei diesen Formulierungen um saure Lösungen, deren pH auf den entsprechenden Wert gepuffert ist. Die Formulierungen werden bevorzugt hergestellt, indem Tryptophan in einem sauren Lösungsmittel gelöst und der pH-Wert der Lösung sofort auf einen neutralen Wert, vorzugsweise auf pH 7,4 gepuffert wird.

Die erfindungsgemäßen Formulierungen können auch eine Mischung von Tryptophan, mit zumindest einem weiteren Wachstumsregulator, wie beispielsweise einem Gibberellin, Abscisinsäure oder anderen, mindestens einem Düngemittel, worunter auch Aminosäuren, Peptide, hydrolysierte Proteine und dergleichen zu verstehen sind, und/oder mindestens einem Tensid umfassen.

Die erwähnten Wirkstoffe können sowohl als Tankmischungen eingesetzt werden, wobei jeder Wirkstoff einzeln formuliert vorliegt und erst zum Zeitpunkt der Anwendung mit anderen formulierten Wirkstoffen im Spritztank des Sprühgeräts gemischt wird, oder sie können bereits gemeinsam formuliert vorliegen und zwar auf verschiedene Art, je nachdem, welche biologischen und/oder chemisch-physikalischen Parameter vorgegeben sind. Als Formulierungsmöglichkeiten kommen beispielsweise in Frage: Spritzpulver, emulgierbare Konzentrate, wasserlösliche Pulver, wasserlösliche Konzentrate, konzentrierte Emulsionen, wie Öl-in-Wasser oder Wasser-in-Öl Emulsionen, versprühbare Lösungen oder Emulsionen, Kapselsuspensionen, Dispersionen auf Öl- oder Wasserbasis, Suspoemulsionen, Suspensionskonzentrate, Granulate in Form von Mikro-, Sprüh-, Aufzugs- oder Adsorptionsgranulaten, wasserlösliche Granulate, wasserdispergierbare Granulate, Mikrokapseln oder wirkstoffhaltige Tabletten.

Die einzelnen Formulierungstypen sind im Prinzip bekannt. Die notwendigen Formulierungshilfsmittel, wie Inertmaterialien, Lösungsmittel und weitere Zusatzstoffe, sind ebenfalls bekannt.

Unter Spritzpulver werden in Wasser gleichmäßig dispergierbare Präparate verstanden, die neben dem Wirkstoff außer einem Verdünnungs- oder Inertstoff noch Netzmittel, z. B. polyoxyethylierte Alkylphenole, polyoxyethylierte Fettalkohole oder Fettamine, Fettalkoholpolyglykolethersulfate, Alkansulfonate oder Alkylarylsulfonate, und/oder Dispergiermittel, z. B. ligninsulfonsaures Natrium, 2,2-Dinaphthylmethan-6,6'-disulfonsaures Natrium, dibutylnaphthalinsulfonsaures Natrium oder auch oleylmethyltaurinsaures Natrium enthalten können.

Für die Anwendung von Tryptophan haben sich besonders ethoxylierte Sorbitanester und Siloxane als vorteilhaft erwiesen. Durch deren Zusatz direkt in das Präparat oder als Tankmischpartner kann die Menge an auszubringendem Tryptophan verringert bzw. dessen Effekte gesteigert werden.

Emulgierbare Konzentrate werden durch Auflösen des Wirkstoffs in einem organischen Lösungsmittel, z. B. Butanol, Cyclohexan, Dimethylformamid, Xylol oder auch höher siedenden Aromaten oder Kohlenwasserstoffen unter Zusatz von einem oder mehreren Emulgatoren hergestellt. Als Emulgatoren können beispielsweise verwendet werden: alkylarylsulfonsaure Calcium-Salze wie Ca-Dodecylbenzolsulfat, oder nichtionische Emulgatoren, wie Fettsäurepolyglykolester, Alkylarylpolyglykolether, Fettalkoholpolyglykolether, Propylenoxid-Ethylenoxid Kondensationsprodukte, z. B. Blockpolymere, Alkylpolyether, Sorbitanfettsäureester, Polyoxyethylensorbitanfettsäure-ester oder Polyoxyethylensorbitanester.

Granulate können entweder durch Verdüsen des Wirkstoffs auf adsorptionsfähiges, granuliertes Inertmaterial hergestellt werden, oder durch Aufbringen von Wirkstoffkonzentraten mittels Klebmitteln, z. B. Polyvinylalkohol, polyacrylsaures Natrium oder auch Mineralöle, auf die Oberfläche von Trägerstoffen wie Sand, Kaolite oder granuliertem Inertmaterial. Auch können geeignete Wirkstoffe in der für die Herstellung von Düngemitteln üblichen Weise, gewünschtenfalls in Mischung mit Düngemitteln, granuliert werden.

Daneben können die genannten Wirkstoffformulierungen die jeweils üblichen Haft-, Netz-, Dispergier-, Emulgier-, Penetrations- und/oder Lösungsmittel sowie Füll- und/oder Trägerstoffe enthalten.

Zur Anwendung werden die in handelsüblichen Formen vorliegenden Formulierungen gegebenenfalls in üblicher Weise verdünnt, z. B. bei Spritzpulvern, emulgierbaren Konzentraten, Dispersionen und wasserdispergierbaren Granulaten mittels Wasser.

### Beispiele

Die nachfolgenden Beispiele beschreiben die Ergebnisse eines Feldversuchs, der die reduzierenden Effekte eines Aufbringens von Tryptophan auf Kirschbäume hinsichtlich des Aufplatzens der Kirschen belegt.

Es wurde der Einfluss von Tryptophan auf das Aufplatzen von Süßkirschen der Sorte "Schneiders" in Belgien untersucht. Die Pflanzdichte betrug 666 Stämme/ha.

Es wurden 2 unterschiedliche Mengen Tryptophan auf die Kirschbäume aufgebracht und im Vergleich zu einer unbehandelten Kontrolle untersucht.
- Beispiel 1:: Kontrolle
- Beispiel 2:: je 25 g/ha Tryptophan am 20. Juni 2002 und am 29. Juni 2002
- Beispiel 3:: je 50 g/ha Tryptophan am 20. Juni 2002 und am 29. Juni 2002

Am 20. Juni 2002 erfolgte die Behandlung der Pflanzen am Abend bei sonnigen Witterungsbedingungen, 22 °C und wenig Wind. Die Kirschen begannen zu reifen.

Am 29. Juni 2002 erfolgte die Behandlung der Pflanzen am Abend, bei leicht bewölktem Himmel, 20 °C und moderatem Wind. Die Reife der Kirschen war in vollem Gange.

Die Auswertung erfolgte am 07. Juli 2002 nach starkem Regenfall. Je 300 Kirschen wurden je Experiment ausgewertet, indem die Anzahl intakter und geschädigter Früchte nach ihrer Ernte ermittelt wurde.

Ergebnis:

| Experiment | Behandlung | Anzahl geschädigter Früchte | Anteil geschädigter Früchte |
|---|---|---|---|
| 1. | Unbehandelt | 84 | 28 % |
| 2. | 2 x 25 g/ha Tryptophan | 78 | 26 % |
| 3. | 2 x 50 g/ha Tryptophan | 42 | 14 % |

Wie aus der Tabelle ersichtlich ist, reduziert eine Gabe von 2-mal 50 g Tryptophan pro ha die Schädigung (das Aufplatzen) der Kirschfrüchte um etwa 50 %.

## Patentansprüche

1. Verfahren zur Verringerung des Aufplatzens von Obst- oder Gemüsefrüchten, **dadurch gekennzeichnet, dass** eine Tryptophan enthaltende Formulierung auf die oberirdischen Teile der zu behandelnden Pflanze aufgebracht wird.

2. Verfahren nach Anspruch 1, **dadurch gekennzeichnet, dass** Tryptophan in einer Menge von 10⁻⁴ bis 10⁶ g/ha, vorzugsweise in einer Menge von 10 bis 1000 g/ha, und besonders bevorzugt in einer Menge von 25 bis 200 g/ha aufgebracht wird.

3. Verfahren nach einem der vorangehenden Ansprüche, **dadurch gekennzeichnet, dass** die Formulierung einen neutralen pH-Wert, vorzugsweise einen pH-Wert von 7,4, aufweist.

4. Verfahren nach einem der vorangehenden Ansprüche, **dadurch gekennzeichnet, dass** Tryptophan in einer Mischung mit mindestens einem anderen Wachstumsregulator aufgebracht wird.

5. Verfahren nach einem der vorangehenden Ansprüche, **dadurch gekennzeichnet, dass** Tryptophan in einer Mischung mit mindestens einem Düngemittel aufgebracht wird.

6. Verfahren nach einem der vorangehenden Ansprüche, **dadurch gekennzeichnet, dass** Tryptophan in einer Mischung mit zumindest einem Tensid aufgebracht wird.

7. Verfahren nach einem der vorangehenden Ansprüche, **dadurch gekennzeichnet, dass** es sich bei den Obst- und Gemüsepflanzen um Pflanzen aus der Gruppe handelt, die aus Tomaten, Steinobst, Kernobst, Beeren und Trauben besteht.

8. Verfahren nach Anspruch 7, **dadurch gekennzeichnet, dass** es sich bei dem Steinobst um die Süßkirsche *(Prunus avium* L.) handelt.

9. Verfahren nach einem der vorangehenden Ansprüche, **dadurch gekennzeichnet, dass** das Aufbringen der wirkstoffhaltigen Formulierung während oder nach der Blüte der zu behandelnden Pflanzen erfolgt.

10. Verfahren nach **Anspruch 9, dadurch gekennzeichnet, dass** das Aufbringen der wirkstoffhaltigen Formulierung nach Ausbilden der Früchte erfolgt.

11. Verwendung einer Tryptophan enthaltenden Formulierung zur Verringerung des Aufplatzens von Obst- oder Gemüsefrüchten.

12. Verwendung nach Anspruch 11, **dadurch gekennzeichnet, daß** die Formulierung einen neutralen pH-Wert, vorzugsweise einen pH-Wert von 7,4, aufweist.

13. Verwendung nach Anspruch 11 oder 12, **dadurch gekennzeichnet, daß** die Formulierung zumindest einen weiteren Wachstumsregulator umfaßt.

14. Verwendung nach einem der Ansprüche 11 bis 13, **dadurch gekennzeichnet, daß** die Formulierung zumindest ein Düngemittel umfaßt.

15. Verwendung nach einem der Ansprüche 11 bis 14, **dadurch gekennzeichnet, daß** die Formulierung zumindest ein Tensid umfaßt.

16. Verwendung nach einem der Ansprüche 11 bis 15, **dadurch gekennzeichnet, dass** es sich bei dem Obst oder Gemüse um Tomaten, Steinobst, Kernobst, Beeren oder Trauben handelt.

17. Verwendung nach Anspruch 16, **dadurch gekennzeichnet, dass** es sich bei dem Steinobst um die Süßkirschen (Pzunus avium L.) handelt.

18. Verwendung nach einem der Ansprüche 11 bis 17, **dadurch gekennzeichnet, dass** die Formulierung auf die oberirdischen Teile der zu behandelnden Pflanze aufgebracht wird.

19. Verwendung nach einem der Ansprüche 11 bis 18, **dadurch gekennzeichnet, dass** die Formulierung während oder nach ihrer Blüte auf die Pflanze aufgebracht wird.

20. Verwendung nach Anspruch 19, **dadurch gekennzeichnet, dass** die Formulierung nach Ausbildung der Früchte auf die Pflanze aufgebracht wird.

## Claims

1. Method for reducing the cracking of fruit or vegetable fruits, **characterized in that** a tryptophan-containing formulation is applied to the epigeal parts of the plant to be treated.

2. Method according to claim 1, **characterized in that** tryptophan is applied in an amount of 10⁻⁴ g/ha to 10⁶ g/ha, preferably in an amount of 10 g/ha to 1000 g/ha, and very preferably in an amount of 25 g/ha to 200 g/ha.

3. Method according to any one of the preceding claims, **characterized in that** the formulation has a neutral pH value, preferably a pH value of 7.4.

4. Method according to any one of the preceding claims, **characterized in that** tryptophan is applied in a mixture with at least one other plant growth regulator.

5. Method according to any one of the preceding claims, **characterized in that** tryptophan is applied in a mixture with at least one fertiliser.

6. Method according to any one of the preceding claims, **characterized in that** tryptophan is applied in a mixture with at least one surfactant.

7. Method according to any one of the preceding claims, **characterized in that** the fruit and vegetable plants are plants from the group consisting of: tomatoes, stone fruit, pome fruit, berries and grapes.

8. Method according to claim 7, **characterized in that** the stone fruit is sweet cherry (*Prunus avium* L.).

9. Method according to any one of the preceding claims, **characterized in that** application of the active agent-containing formulation is performed during or after the flowering of the plant to be treated.

10. Method according to claim 9, **characterized in that** application of the active agent-containing formulation is performed after formation of the fruits.

11. Use of a tryptophan-containing formulation for reducing the cracking of fruit or vegetable fruits.

12. Use according to claim 11, **characterised in that** the formulation has a neutral pH value, preferably a pH value of 7.4.

13. Use according to claim 11 or 12, **characterised in that** the formulation comprises at least one further growth regulator.

14. Use according to any one of claims 11 to 13, **characterised in that** the formulation comprises at least one fertilizer.

15. Use according to any one of claims 11 to 14, **characterised in that** the formulation comprises at least one surfactant.

16. Use according to any one of claims 11 to 15, **characterised in that** the fruit or vegetable fruits are tomatoes, stone fruit, pome fruit, berries or grapes.

17. Use according to claim 16, **characterized in that** the stone fruit is sweet cherry (*Prunus avium L.*).

18. Use according to any one of the claims 11 to 17, **characterised in that** the formulation is applied to the epigeal parts of the plant to be treated.

19. Use according to any one of the claims 11 to 18, **characterised in that** the formulation is applied to the plant during or after the flowering of the plant.

20. Use according to claim 19, **characterised in that** the formulation is applied to the plant after formation of the fruits.

## Revendications

1. Procédé pour faire diminuer l'éclatement des fruits et légumes, **caractérisé en ce qu'**on dépose sur les parties aériennes de la plante à traiter une formulation contenant du tryptophane.

2. Procédé selon la revendication 1, **caractérisé en ce qu'**on dépose le tryptophane en une quantité de 10⁻⁴ à 10⁶ g/ha, de préférence en une quantité de 10 à 1000 g/ha, et de façon particulièrement préférée en une quantité de 25 à 200 g/ha.

3. Procédé selon l'une des revendications précédentes, **caractérisé en ce que** la formulation présente un pH neutre, de préférence un pH de 7,4.

4. Procédé selon l'une des revendications précédentes, **caractérisé en ce qu'**on dépose le tryptophane dans un mélange avec au moins un autre régulateur de croissance.

5. Procédé selon l'une des revendications précédentes, **caractérisé en ce qu'**on dépose le tryptophane dans un mélange avec au moins un engrais.

6. Procédé selon au moins une des revendications précédentes, **caractérisé en ce que** le tryptophane est déposé dans un mélange avec au moins un agent tensioactif.

7. Procédé selon l'une des revendications précédentes, **caractérisé en ce que**, pour ce qui est des plantes de fruits et de légumes, il s'agit de plantes du groupe qui est constitué des tomates, des fruits à pépins, des fruits à noyau, des baies et du raisin.

8. Procédé selon la revendication 7, **caractérisé en ce que**, pour ce qui est du fruit à pépin, il s'agit de la merise *(Prunus avium L.).*

9. Procédé selon l'une des revendications précédentes, **caractérisé en ce que** l'apport de la formulation contenant une matière active s'effectue pendant ou après la floraison des plantes à traiter.

10. Procédé selon la revendication 9, **caractérisé en ce que** l'apport de la formulation contenant une matière active s'effectue après formation des fruits.

11. Utilisation d'une formulation contenant du tryptophane pour faire diminuer l'éclatement des fruits ou des légumes.

12. Utilisation selon la revendication 11, **caractérisée en ce que** la formulation présente un pH neutre, de préférence un pH de 7,4.

13. Utilisation selon la revendication 11 ou 12, **caractérisée en ce que** la formulation comprend au moins un autre régulateur de croissance.

14. Utilisation selon l'une des revendications 11 à 13, **caractérisée en ce que** la formulation comprend au moins un engrais.

15. Utilisation selon l'une des revendications 11 à 14, **caractérisée en ce que** la formulation comprend au moins un agent tensioactif.

16. Utilisation selon l'une des revendications 11 à 15, **caractérisée en ce que**, pour ce qui est des fruits et légumes, il s'agit de tomates, de fruits à pépins, de fruits à noyaux, de baies ou de raisin.

17. Utilisation selon la revendication 16, **caractérisée en ce que**, pour ce qui est des fruits à pépins, il s'agit des merises *(Prunus avium L.).*

18. Utilisation selon l'une des revendications 11 à 17, **caractérisée en ce que** la formulation est déposée sur les parties aériennes de la plante à traiter.

19. Utilisation selon l'une des revendications 11 à 18, **caractérisée en ce que** la formulation est déposée sur les plantes pendant ou après leur floraison.

20. Utilisation selon la revendication 19, **caractérisée en ce que** la formulation est déposée sur les plantes après la formation des fruits.
